# EUROPÄISCHE PATENTSCHRIFT

(11) **EP 3 544 832 B1**
(45) Veröffentlichungstag und Bekanntmachung des Hinweises auf die Patenterteilung: **20.10.2021**
(21) Anmeldenummer: 17829929.3
(22) Anmeldetag: 24.11.2017
(51) Int. Cl.: B60C 23/12

(54) **VERDICHTERANORDNUNG**
COMPRESSOR ASSEMBLY
ENSEMBLE COMPRESSEUR

(30) Priorität: 24.11.2016 DE 102016122737
(43) Veröffentlichungstag der Anmeldung: 02.10.2019
(73) Patentinhaber: KT Projektentwicklungs-GmbH, 74199 Untergruppenbach (DE); Illinois Tool Works, Inc., Glenview, Illinois 60025 (US)
(72) Erfinder: TSIBERIDIS, Konstantin, 74199 Untergruppenbach (DE)
(74) Vertreter: Trinks, Ole
(86) Internationale Anmeldenummer: PCT/EP2017/080388
(87) Internationale Veröffentlichungsnummer: WO 2018/096110

(56) Entgegenhaltungen:
- EP-A1- 1 881 197

## Beschreibung

Die Erfindung betrifft eine Verdichteranordnung zur Druckmittelversorgung einer Reifenkavität eines Reifens, nach dem Oberbegriff des Anspruchs 1.

Eine gattungsgemäße Verdichteranordnung ist aus der EP1881197 A1 bekannt.

Die Reifenkavität des Reifens ist also Teil eines auf einer Radnabe montierbaren Fahrzeugrads, wobei die Radnabe um eine Rotationsachse drehbar an einem Radträger gelagert ist.

Zur Befüllung einer Reifenkavität eines Fahrzeugreifens mit einem Druckmittel, wie etwa Druckluft, ist es bekannt, ein Reifenventil am Fahrzeugrad vorzusehen, über welches das Druckmittel in die Reifenkavität eingebracht werden kann.

Bei Fahrzeugen, wie Personenkraftwagen, Lastkraftwagen oder Nutzfahrzeugen, sind Reifenventile üblicherweise im Bereich einer Felge, auf der der Reifen montiert ist, so angeordnet, dass sie von außen leicht zugänglich sind.

An das Reifenventil kann eine fahrzeugexterne Druckmittelquelle angeschlossen werden, etwa mittels einer Schlauchleitung, um so den Reifendruck, insbesondere auf manuelle Weise, kontrollieren und gegebenenfalls korrigieren zu können.

Ferner sind fahrzeugseitige Druckmittelversorgungssysteme bekannt, die es gestatten, die Druckmittelbefüllung der Reifenkavität eines Fahrzeugreifens autonom vorzunehmen. Hierzu ist es bekannt von einer zentralen, fahrzeugseitig bereitgestellten Druckmittelquelle, beispielsweise einem Kompressor oder einem Druckspeicher, Druckmittelleitungen bis zu den Rädern vorzusehen und in die Reifenkavität zu führen. Beim Übergang von gegenüber dem Fahrzeug drehfesten Bauteilen, wie dem Radträger, auf die sich im Fahrbetreib drehenden Räder werden sogenannte Drehdurchführungen realisiert, die eine Druckmittelbefüllung auch während der Fahrt, d.h. bei sich drehenden Rädern, ermöglichen. Auf diese Weise kann der Reifendruck z.B. an veränderte Beladungsverhältnisse, Fahrbahnoberflächen und Umgebungstemperaturen angepasst werden oder Leckagen bspw. über Diffusion ausgeglichen werden.

Ein Problem der bekannten Systeme ist, dass bei fahrzeugexternen Druckmittelquellen jeweils gehalten und der Druck in allen Reifenkavitäten aufwändig geprüft werden muss. Bei den bekannten fahrzeugseitigen Druckmittelquellen, die über Drehdurchführungen Druckmittel an die Reifenkavität fördern, stellt die Betriebssicherheit der Drehdurchführungen für das Druckmittel ein Problem dar. Die Drehdurchführungen lassen sich nur mit sehr hohem Aufwand derart robust und langlebig fertigen, dass sie ein Fahrzeugleben lang halten, was teuer und unwirtschaftlich ist.

Aufgabe der vorliegenden Erfindung ist es, eine Verdichteranordnung zu schaffen, die zuverlässig und wartungsarm über ein gesamtes Fahrzeugleben hinweg eine Befüllung der Reifenkavität mit Druckmittel sicherstellt.

Vorzugsweise arbeitet die Verdichteranordnung dabei automatisiert. Unter automatisiert ist dabei zu verstehen, dass hier kein Anhalten und Verwenden einer fahrzeugexternen Druckmittelquelle nötig ist. Die Aufnahme des Betriebs der erfindungsgemäßen Verdichteranordnung kann jedoch autonom, d.h. über eine beliebig gestaltete Regel- oder Steueranordnung im Fahrzeug erfolgen oder auf ein Steuersignal durch den Fahrzeugführer hin.

Diese Aufgabe wird durch eine Verdichteranordnung nach Anspruch 1 gelöst. Die erfindungsgemäße Verdichteranordnung kennzeichnet sich dadurch, dass die Verdichteranordnung wenigstens einen nabenseitigen Kompressionsraum umfasst, dessen Volumen durch eine translatorische Bewegung eines Verdichterbauteils veränderbar ist, wobei durch eine Volumenverminderung des Kompressionsraums ein in die Reifenkavität zu leitendes Druckmittel unter Druck setzbar ist, und wobei die Verdichteranordnung ein Getriebe, vorzugsweise ein Kurvengetriebe, umfasst, das eingerichtet ist, um durch ein Zusammenwirken eines radträgerseitigen Getriebeteils mit einem nabenseitigen Getriebeteil eine Rotationsbewegung zwischen Radträgerseite und Radnabenseite in eine oszillierende translatorische Bewegung des Verdichterbauteils umzuwandeln, wobei das radträgerseitige Getriebeteil eine Zylinderkurve umfasst.

Eine derartige Verdichteranordnung hat den Vorteil, dass sie aufgrund ihrer rein mechanisch möglichen Bauweise sehr robust ausgeführt sein kann. Durch die nabenseitige Anordnung des Kompressionsraus wird das unter Druck stehende Druckmittel direkt am sich drehenden Teil des Fahrzeugrades bereitgestellt, sodass eine Drehdurchführung für das Druckmittel nicht notwendig ist. Mit anderen Worten wird das Druckmittel direkt am Einsatzort also an der sich drehenden Reifenkavität bereitgestellt.

Drehdurchführungen für Druckmittel sind schwierig zu gestalten und Ihre Zuverlässige und langfristig funktionsfähige Realisierung ist technisch anspruchsvoll. Die Realisierung solcher Druckmitteldrehdurchführungen wird überdies durch die widrigen Umstände im Bereich des Fahrzeugrades erschwert, da hier mit starken Verschmutzungen und stoßartigen Belastungen zu rechnen ist. Die erfindungsgemäße Verdichteranordnung ermöglicht es beim Fahrbetrieb des Fahrzeugs, in dem die Verdichteranordnung montiert ist, stets Druckmittel unter ausreichendem Druck zur Verfügung zu stellen und somit eine stets ausreichenden Füllung des Reifens sicherzustellen.

Von Vorteil ist, wenn die translatorische Bewegung des Verdichterbauteils wenigstens teilweise in Richtung der Rotationsachse, vorzugsweise vollständig in Richtung der Rotationsachse, erfolgt. Hierdurch kann die Verdichteranordnung besonders platzsparend in radialer Richtung also orthogonal zur Richtung der Rotationsachse bei großen Volumen des Kompressionsraums realisiert werden.

Im Kontext der vorliegenden Anmeldung sind unter Nabenseite und nabenseitigen Komponenten derartige Komponenten zu verstehen, die gegenüber der Radnabe drehfest angeordnet sind. Derartige Komponenten sind also unmittelbar oder mittelbar mit der Radnabe derart verbunden, dass sie sich bei einer Rotation der Radnabe relativ zum Radträger mit der Radnabe drehen. Der Radträger ist fahrzeugfest. Radträgerseite und radträgerseitige Komponenten sind damit gegenüber dem Radträger drehfest. Bei einer Rotation des Rades bzw. der Radnabe erfolgt also eine rotatorische Relativbewegung zwischen den radträgerseitigen Komponenten, bspw. der Fahrgastzelle des Fahrzeugs und dem Rad bzw. dem Reifen, der Radnabe und den weiteren nabenseitigen Komponenten.

Das radträgerseitige Getriebeteil ist also im am Fahrzeug angebrachten Zustand vollständig drehfest mit den radträgerseitigen Komponenten verbunden. Im Fahrbetrieb des Fahrzeugs dreht sich also kein Teil des radträgerseitigen Getriebeteils. Es drehen sich lediglich die nabenseitigen Komponenten, insbesondere das nabenseitige Getriebeteil dreht sich vollständig um die Rotationsachse.

Das nabenseitige Getriebeteil ist also stets drehfest mit den sich im Fahrbetreib des Fahrzeugs drehenden nabenseitigen Komponenten. Das radträgerseitige Getriebeteil ist jedenfalls dann, wenn die Verdichteranordnungen im Betrieb ist, jedoch vorzugsweise stets, drehfest mit dem Fahrzeug bzw. radträgerseitigen Komponenten.

Vorzugsweise ist das radträgerseitige Getriebeteil vollständig starr und unbeweglich, also weder rotatorisch noch translatorisch beweglich, gegenüber der Radträgerseite angeordnet.

Vorzugsweise ist eine der erfindungsgemäßen Verdichteranordnungen an jedem Rad eines Fahrzeugs angeordnet, sodass alle Räder des Fahrzeugs stets mit ausreichendem Druck in ihrer jeweiligen Reifenkavität versorgt sind. Da dementsprechend jedes Rad seine eigene Druckmittelversorgung umfasst sind Drehdurchführungen zur Druckmittelversorgung überflüssig.

Gegenstand der vorliegenden Erfindung ist auch ein Fahrzeug, indem die beschriebene Verdichteranordnung verbaut ist.

Von Vorteil ist insbesondere, wenn das radträgerseitige Getriebeteil eine nutartige Kurvenbahn umfasst.

Durch Vorsehen einer nutartigen Kurvenbahn am radträgerseitigen Getriebeteil ist es möglich, eine formschlüssige Führung des nabenseitigen Getriebeteils auf einfache Art und Weise zu realisieren, wodurch eine stets kontrollierte Umwandlung der Drehbewegung zwischen Radträgerseite und nabenseitigen, also sich mit dem Rad drehenden Komponenten, sichergestellt ist. Überdies kann hierdurch das nabenseitige Getriebeteil in einfacher konstruktiver Form ausgeführt werden.

Von Vorteil ist außerdem, wenn das nabenseitige Getriebeteil einen Stößelabtrieb umfasst. Hierdurch wird in einfacher und präzise vorgeschriebener Art und Weise die oszillierende translatorische Bewegung des Verdichterbauteils sichergestellt.

In einer bevorzugten Ausführungsform ist die Verdichteranordnung derart ausgebildet, dass das nabenseitige Getriebeteil ein stiftartiges Eingriffselement zum Eingriff in die Zylinderkurve, vorzugsweise in die nutartige Kurvenbahn umfasst. Eine derartige Ausführung des nabenseitigen Getriebeteils erlaubt eine effektive Kraftübertragung und Bewegungsumwandlung zwischen nabenseitigem und radträgerseitigem Getriebeteil.

In weiterer bevorzugter Ausführung der erfindungsgemäßen Verdichteranordnung umfasst das nabenseitige Getriebeteil ein Eingriffselement zum Eingriff in die Zylinderkurve, wobei das Eingriffselement an seinen dem radträgerseitigen Getriebeteil zugewandten Ende einen Querschnitt aufweist dessen Erstreckung in axialer Richtung sich aufweitet. Hierdurch wird ein druckfreies und quasi gleitendes Eingreifen des Eingriffselements in die Zylinderkurve des radträgerseitigen Getriebeteils ermöglicht.

Eine weitere bevorzugte Ausführungsform der erfindungsgemäßen Verdichteranordnung kennzeichnet sich dadurch, dass die Zylinderkurve wenigstens eine Kurvenflanke aufweist, die wenigstens in einem Teilbereich ihres in radialer Richtung gesehenen Verlaufs zu der Rotationsachse hin verläuft.

Die entsprechend geformte Kurvenflanke ermöglicht ein ruckfreies Einkuppeln des nabenseitigen Getriebeteils mit dem radträgerseitigen Getriebeteil. Besonders bevorzugt ist dabei die Kombination der eben beschriebenen Kurvenflanke mit dem Eingriffselement mit sich aufweitendem Querschnitt, wie oben beschrieben.

Bevorzugt ist außerdem, wenn das radträgerseitige Getriebeteil eine nutartige Kurvenbahn umfasst, wobei die Kurvenbahn zwei sich gegenüberliegende Kurvenflanken aufweist, die jeweils wenigstens in einem Teilbereich ihres in radialer Richtung gesehenen Verlaufs zu der Rotationsachse hin verlaufen. Derartig verlaufende Kurvenflanken ermöglichen neben einem ruckfreien Einkuppeln auch eine selbst zentrierende Wirkung des radträgerseitigen Getriebeteils im Zusammenspiel mit dem nabenseitigen Getriebeteil. Der Eingriff des nabenseitigen Getriebeteils in die eben beschriebene Kurvenbahn zwängt die nabenseitigen Getriebeteile quasi in die korrekte Eingriffsstellung.

Bevorzugt ist auch eine Ausführungsform, bei der das Verdichterbauteil einen Ringkolben umfasst.

Hierdurch wird bei minimalem Bedarf an Bauraum eine maximal erreichbare Förderleistung realisiert, da bei dieser Ausführungsform die gesamte umfängliche Erstreckung des Ringkolbens zur Bereitstellung des Kompressionsraums genutzt werden kann.

Von Vorteil ist auch eine Ausführungsform, die sich dadurch kennzeichnet, dass entlang der Rotationsachse gesehen jeweils vor und hinter einem Kontaktabschnitt des nabenseitigen Getriebeteils mit der Zylinderkurve ein Kompressionsraum angeordnet ist. Eine hohe Förderleistung ist hierdurch möglich. Da das Verdichterbauteil eine oszillierend translatorische Bewegung ausführt, können jeweils die Vor- und Zurückbewegung bei dieser Ausführungsform zum Fördern von Druckmittel genutzt werden.

Eine weitere bevorzugte Ausführungsform kennzeichnet sich dadurch, dass das radträgerseitige Getriebeteil radial einwärts von dem nabenseitigen Getriebeteil angeordnet ist.

Hierdurch kann in einfacher platzsparender Weise das radträgerseitige Getriebeteil mit dem Radträger verbunden werden und um das radträgerseitige Getriebeteil herum das nabenseitige Getriebeteil platzsparend angeordnet werden. Dabei bietet diese Ausführungsform insbesondere Vorteile bei der Kombination mit dem Verdichterbauteil, das als Ringkolben ausgeführt ist, da in diesem Ausführungsbeispiel dann auch der Ringkolben baulich einfach radial auswärts vom radträgerseitigen Getriebeteil angeordnet sein kann und hiermit eine große Umfangsfläche zur Realisierung des Ringkolbens verfügbar ist.

Es ist auch möglich, dass das radträgerseitige Getriebeteil radial auswärts von dem nabenseitigen Getriebeteil angeordnet ist. Hierdurch kann eine zentrale Anordnung eines Anschlusses für eine Kupplungseinrichtung realisiert werden.

Vorteilhaft ist überdies auch eine Ausführungsform, die sich dadurch kennzeichnet, dass das nabenseitige Getriebeteil in eine Stellung vorgespannt ist, in der es nicht mit dem radträgerseitigen Getriebeteil zusammenwirkt. Hierdurch wird sichergestellt, dass die erfindungsgemäße Verdichteranordnung nur betrieben wird, wenn Druckmittel in der Reifenkavität benötigt wird. Hierzu können die nabenseitigen Getriebeteile über einen Steuerimpuls in Eingriff mit dem radträgerseitigen Getriebeteil gebracht werden. Wenn dieser Steuerimpuls nicht gegeben ist, so kehrt das nabenseitige Getriebeteil automatisch in seine Stellung zurück, in der es nicht mit dem radträgerseitigen Getriebeteil zusammenwirkt. Hierdurch kann das Kraftfahrzeug weiter ohne zusätzlichen Energieaufwand betrieben werden. Überdies wird ein Verschleiß der Verdichteranordnung ausgeschlossen, wenn die Verdichteranordnung nicht benötigt wird.

Von Vorteil ist auch eine Ausführungsform, bei der das nabenseitige Getriebeteil pneumatisch, magnetisch, elektrisch oder elektromechanisch in eine Stellung überführbar ist, in der es mit dem radträgerseitigen Getriebeteil zusammenwirkt. Hierdurch kann durch einen einfachen Steuerimpuls der Betrieb der Verdichteranordnung bei Bedarf aufgenommen werden. Besonders bevorzugt ist dabei die pneumatische Überführung des nabenseitigen Getriebeteils.

Erfindungsgemäß ist, wenn das nabenseitige Getriebeteil durch eine, vorzugsweise ausschließlich, translatorische Bewegung in radialer Richtung in eine Stellung überführbar ist, in der es mit dem radträgerseitigen Getriebeteil zusammenwirkt. Das nabenseitige Getriebeteil kann dann einfach pneumatisch oder magnetisch aktuiert werden.

Vorteilhaft ist, wenn die Verdichteranordnung eine Kupplungseinrichtung umfasst, mittels welcher das nabenseitige Getriebeteil in Zusammenwirkung mit dem radträgerseitigen Getriebeteil bringbar ist. Die Verdichteranordnung kann bei Bedarf auf einfache Art aktiviert werden.

Vorteilhaft ist, wenn die Kupplungseinrichtung derart ausgebildet ist, dass das nabenseitige Getriebeteil in eine Stellung vorgespannt ist, in der es nicht mit dem radträgerseitigen Getriebeteil zusammenwirkt. Die Verdichteranordnung kehrt dann automatisch aufgrund der Vorspannung in eine deaktivierte Stellung zurück.

Die Kupplungseinrichtung ist vorzugsweise pneumatisch, betätigbar ist, ein Druckspeicher oder Druck aus der Reifenkavität können dann zum Kuppeln genutzt werden.

Die Kupplungseinrichtung ist also vorzugsweise mittels Druckmittel aus der Reifenkavität betätigbar.

Vorteilhaft ist, wenn ein Kupplungsventil fluidisch zwischen Kupplungseinrichtung und Reifenkavität vorgesehen ist, an dem das Druckmittel aus der Reifenkavität anliegt und welches bei Unterschreiten eines Reifendruckschwellenwerts öffnet, wodurch die Kupplungseinrichtung mittels Druckmittel aus der Reifenkavität betätigt wird und das nabenseitige Getriebeteil in Zusammenwirkung mit dem radträgerseitigen Getriebeteil gebracht wird. Hierdurch wird eine automatische Füllung des Reifens sichergestellt. Mit anderen Worten, unterschreitet der Druck in der Reifenkavität den Druckschwellenwert, so öffnet dieses Kupplungsventil und das pneumatisch aktuierbare nabenseitige Getriebeteil wird in eine Stellung überführt, in der es mit dem radträgerseitigen Getriebeteil zusammenwirkt, wodurch das Verdichterbauteil in seine oszillierende translatorisch Bewegung übergeht und die Verdichteranordnung beginnt, Druckmittel aus dem Kompressionsraum in die Reifenkavität zu fördern.

Vorteilhaft ist, wenn bei Überschreiten eines Reifendrucksollwerts, vorzugsweise der über dem Reifendruckschwellenwert liegt, schließt, wodurch die Beaufschlagung der Kupplungseinrichtung mit Druckmittel unterbrochen wird, vorzugsweise wobei das Kupplungsventil oder ein Entlastungsventil bei Überschreiten des Reifendrucksollwerts die Kupplungseinrichtung entlüftet. Hierdurch schaltet sich die Verdichteranordnung automatisch und schnell ab. Besonders bevorzugt ist dabei, wenn zwischen dem Reifenschwellendruckwert und dem Solldruck ein Unterschied besteht, wenn der Solldruck also höher liegt, als der Reifenschwellendruckwert. Das Öffnen des Kupplungsventils hat hierdurch gewissermaßen eine Hysterese. Beispielsweise kann das Kupplungsventil öffnen, wenn der Reifendruck unter einen Wert x fällt und dann wieder schließen, wenn der Reifendruck über einem Wert 1, 1x liegt.

Vorteilhaft ist, wenn die Verdichteranordnung eine Einrichtung zur Messung und/oder Anzeige des Drucks, der Temperatur und/oder der Feuchtigkeit des Druckmittels in der Reifenkavität umfasst, vorzugsweise die über die Druckmittelleitung mit der Reifenkavität verbindbar ist. Die Verdichteranordnung ist ohnehin mit der Reifenkavität verbunden und kann so auf einfache Art und Weise Messdaten über den Zustand des Druckmittels in der Reifenkavität liefern.

Vorteilhaft ist, wenn die Verdichteranordnung druckmitteleinlassseitig mit einem Filter verbunden ist. Hierdurch wird ein Ausfall der Verdichteranordnung Verschmutzung vermieden.

Vorteilhaft ist, wenn die Verdichteranordnung ausgebildet ist, um Druckmittel aus der Reifenkavität oder über Förderung durch die Verdichteranordnung zum Reinigen des Filters zu verwenden. Die Verdichteranordnung mit Filter ist dadurch quasi selbst reinigend.

Weitere Merkmale, Anwendungsmöglichkeiten und Vorteile der Erfindung ergeben sich der nachfolgenden Beschreibung von Ausführungsbeispielen der Erfindung, die anhand der Zeichnungen erläutert werden, wobei die Merkmale sowohl in Alleinstellung als auch in unterschiedlichen Kombinationen für die Erfindung wesentlich sein können, ohne das hierauf explizit hingewiesen wird. Es zeigen:

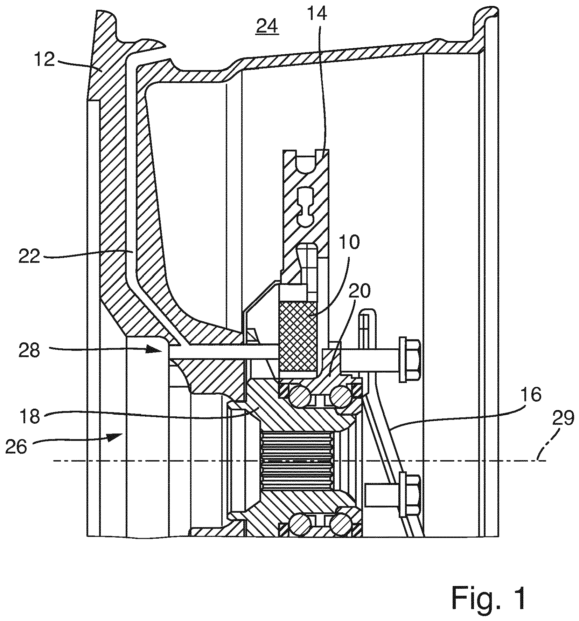

Figur 1 eine erfindungsgemäße Verdichteranordnung im eingebauten Zustand in schematischer Darstellung.
Figuren 2
   bis 5 eine erfindungsgemäße Verdichteranordnung in einer ersten Ausführungsform;
Figuren 6
   bis 8 eine weitere Ausführungsform der erfindungsgemäßen Verdichteranordnung;
Figuren 9
   bis 12 eine weitere Ausführungsform der erfindungsgemäßen Verdichteranordnung;
Figuren 13
   bis 14 eine weitere Ausführungsform der erfindungsgemäßen Verdichteranordnung;
Figuren 15
   bis 17 eine weitere Ausführungsform der erfindungsgemäßen Verdichteranordnung;
Figur 18 eine schematische Darstellung einer Verdichteranordnung mit Filter; und

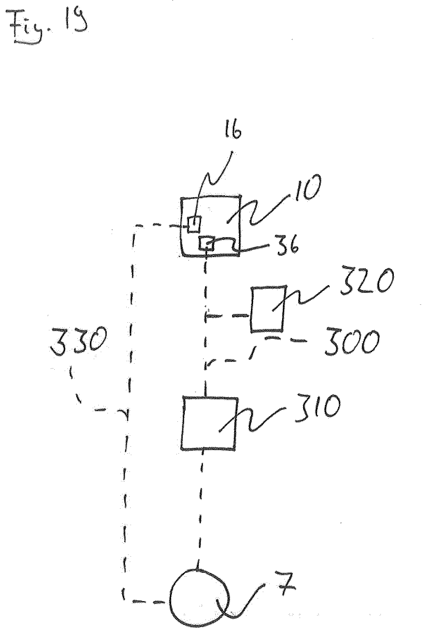

Figur 19 eine schematische Darstellung einer Verdichteranordnung mit Kupplungsventil.

In den folgenden Figuren tragen sich entsprechende Bauteile und Elemente gleiche Bezugszeichen.

In Figur 1 ist die Einbaulage einer erfindungsgemäßen Verdichteranordnung 10 schematisch dargestellt. Die Verdichteranordnung ist in Figur 1 nur schematisch durch eine kreuzschraffierte Fläche dargestellt.

Eine Felge trägt das Bezugszeichen 12. Eine Bremsscheibe das Bezugszeichen 14, ein Radträger das Bezugszeichen 16, eine Radnabe das Bezugszeichen 18 und ein Radlager trägt das Bezugszeichen 20.

Von der Verdichteranordnung 10 erstreckt sich eine Druckmittelleitung 22 bis zur Reifenkavität 24.Der Reifen selbst ist in Figur 1 nicht dargestellt.

Im Bereich einer Radnabenaufnahme 26 weist die Felge einen schematisch dargestellten Anschluss 28 zum Zuführen eines Abdichtmittels auf. Der Anschluss 28 ist dabei optional.

Eine Drehachse 29 ist strichpunkiert dargestellt und trägt das Bezugszeichen 29. In der in Figur 1 gezeigten Ausführungsform erstreckt sich die Druckmittelleitung 22 durch das Material der Felge 12. Forteilhafterweise ist ein Abschnitt der Druckmittelleitung 22 durch eine holgebohrte Bremsscheibenbefestigungsschraube der Bremsscheibe 14 realisiert.

Eine Verdichteranordnung in Kombination mit einer allgemeinen Felge bei der sich die Druckmittelleitung 22 wenigstens abschnittsweise durch das Material der Felge 12 erstreckt ist ebenso eine eigenständige Erfindung im Sinne dieser Anmeldung.

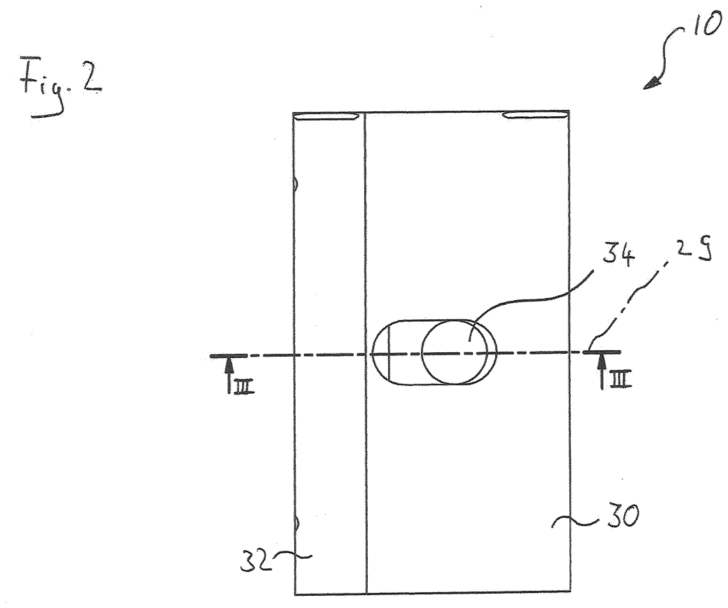

Figur 2 zeigt eine erste Ausführungsform einer erfindungsgemäßen Verdichteranordnung 10 in einer Seitenansicht. Die Verdichteranordnung 10 umfasst ein erstes nabenseitiges Gehäuseteil 30 sowie ein zweites nabenseitiges Gehäuseteil 32.

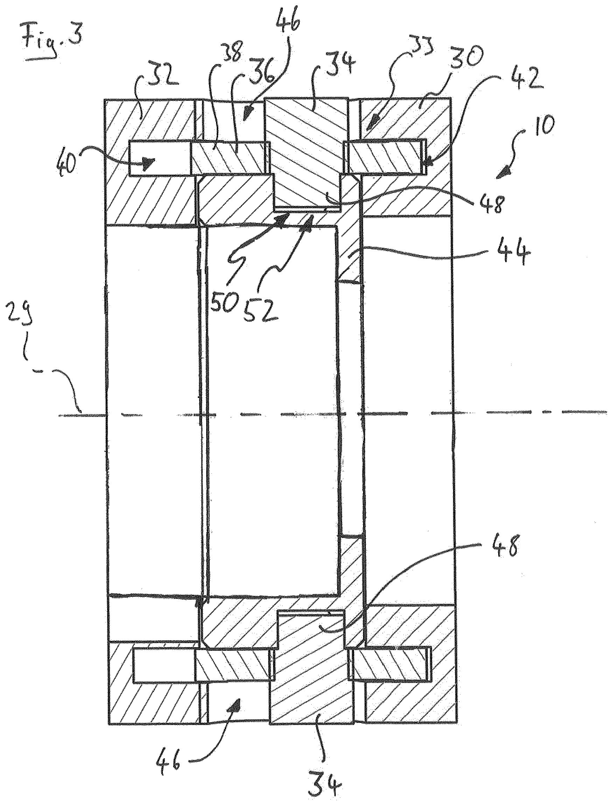

In Figur 3 ist die Verdichteranordnung 10 aus Figur 2 entlang der Rotationsachse 29 mit Blick in Richtung der Pfeile III geschnitten dargestellt.

Ein Getriebe trägt das Bezugszeichen 33 und ist als Kurvengetriebe ausgeführt. Ein nabenseitiges Getriebeteil trägt das Bezugszeichen 34. In Figur 3 ist erkennbar, dass die Verdichteranordnung 10 mehrere der nabenseitigen Getriebeteile 34 aufweist. Mit den nabenseitigen Getriebeteilen 34 ist ein Ringkolben 36 verbunden, der ein Verdichterbauteil 38 darstellt. Das nabenseitige Getriebeteil 34 bildet durch seine linear geführte Lagerung einen Stößelabtrieb des Getriebes 33.

Das Verdichterbauteil 38 in Form des Ringkolbens 36 begrenzt einen ersten Kompressionsraum 40 sowie einen zweiten Kompressionsraum 42.

Die nabenseitigen Getriebeteile 34 stehen mit einem radträgerseitigen Getriebeteil 44 derart in Eingriff, dass sie mit diesen zusammenwirken können. Die nabenseitigen Getriebeteile 34 sind in dem ersten nabenseitigen Gehäuseteil in schlitzartigen Ausnehmungen 46 gelagert. Durch die Lagerung in den schlitzartigen Ausnehmungen 46 können die nabenseitigen Getriebeteile 34 sich lediglich entlang der Richtung der Rotationsachse 29 translatorisch gegenüber dem ersten nabenseitigen Gehäuseteil 30 bewegen.

Die nabenseitigen Getriebeteile 34 stehen wie bereits erwähnt im Eingriff mit dem radträgerseitigen Getriebeteil 44. Die Eingriffsabschnitte 48 der jeweiligen nabenseitigen Getriebeteile 34 greifen dabei in eine an dem radträgerseitigen Getriebeteil befindliche Kurvenbahn 50 ein. Die Kurvenbahn 50 ist eine Ausführungsform einer Zylinderkurve 52.

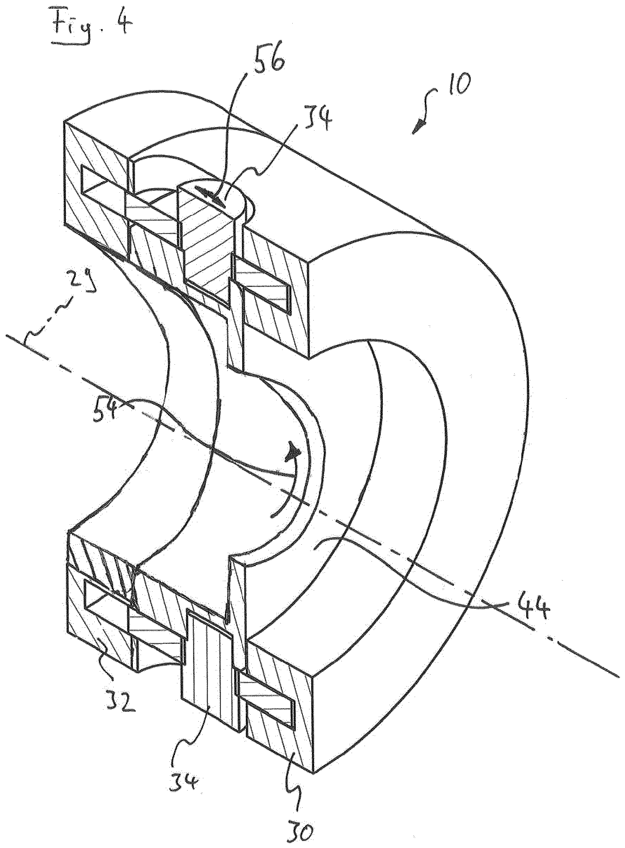

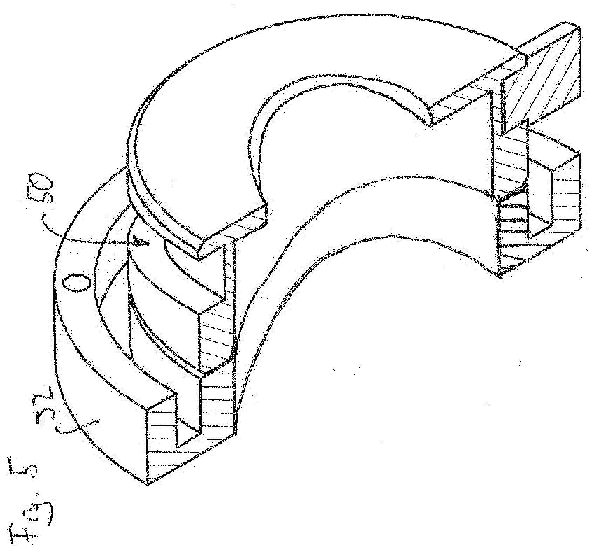

In Figur 4 ist die Verdichteranordnung aus den Figuren 2 und 3 in einer perspektivisch geschnittenen Darstellung gezeigt und in Figur 5 in einer der Figur 4 ähnlichen perspektivischen Darstellung, wobei in Figur 5 lediglich eines der nabenseitigen Getriebeteile 34 dargestellt ist und der Ringkolben 36 sowie das zweite nabenseitige Getriebeteil 34 und das erste nabenseitige Gehäuseteil 30 jeweils nicht dargestellt sind. In Figur 5 ist daher der Verlauf der Kurvenbahn 50 besonders deutlich sichtbar.

In Figur 4 ist die Betriebsweise der Verdichteranordnung 10 illustriert. Eine rotatorische Relativbewegung zwischen dem radträgerseitigen Getriebeteil 44 und den nabenseitigen Komponenten ist durch einen gekrümmten Pfeil mit dem Bezugszeichen 54 angedeutet. Da die Kurvenbahn 50 über ihren umfänglichen Verlauf ihre Position in Richtung der Rotationsachse 29 ändert und das radträgerseitige Getriebeteil 44 an einer translatorischen Bewegung entlang der Rotationsache 29 gegenüber den nabenseitigen Komponenten gehindert ist, bewegen sich die nabenseitigen Getriebeteile 34 durch die Rotation des radträgerseitigen Getriebeteils 44 entlang der mit einem Doppelpfeil 56 gekennzeichneten Richtung entlang der Rotationsachse 29 auf und ab.

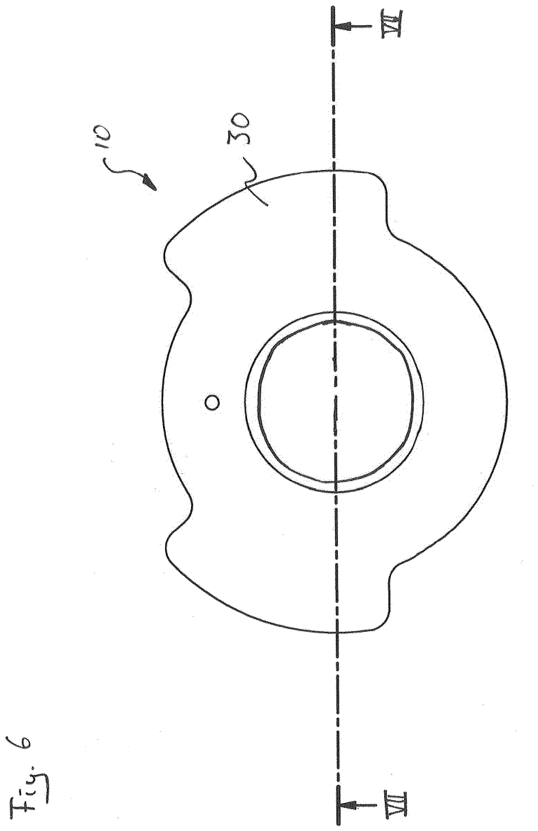

Figur 6 zeigt eine alternative Ausführungsform einer erfindungsgemäßen Verdichteranordnung 10.

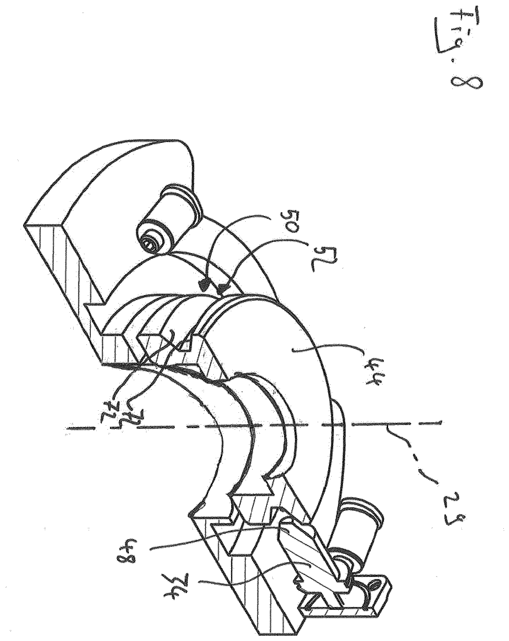

Die Ausführungsform gemäß den Figuren 6 bis 8 unterscheidet sich von der vorigen Ausführungsform 1 bis 5 dadurch, dass die nabenseitigen Getriebeteile 34 kuppelbar mit dem radträgerseitigen Getriebeteil 44 sind. Zur Kupplung der nabenseitigen Getriebeteile 34 mit dem radträgerseitigen Getriebeteil 44 wird eine getriebeteilseitige Druckmittelkammer 60 mit Druckmittel beaufschlagt, wodurch sich die nabenseitigen Getriebeteile 34 in Richtung des radträgerseitigen Getriebeteils 44 bewegen. Die nabenseitigen Getriebeteile 34 und die getriebeteilseitigen Druckmittelkammern 60 bilden Teil einer Kupplungseinrichtung 62.

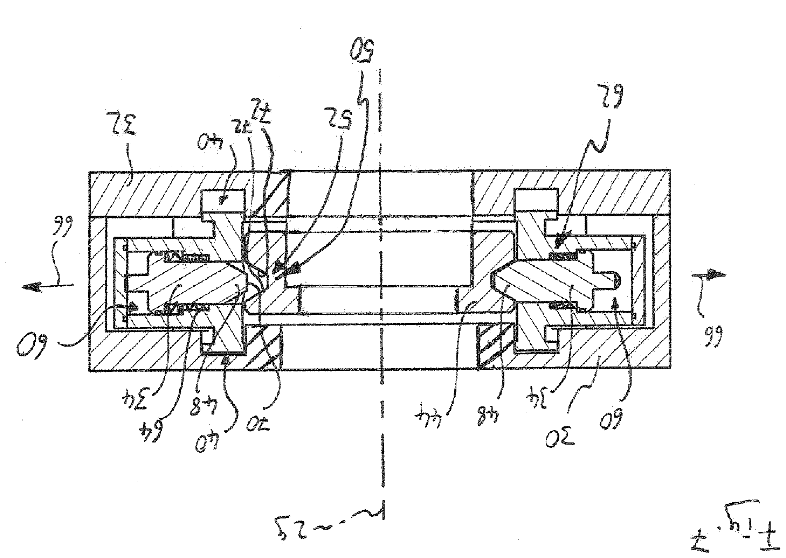

Werden die getriebeteilseitigen Druckräume 60 nicht mehr mit Druckmittel beaufschlagt so kehren die nabenseitigen Getriebeteile 34 in ihre vorgespannte Stellung wie auf der rechten Seite von Figur 7 gezeigt zurück, da sie jeweils durch eine Druckfeder 64 in diese Position vorgespannt sind.

Der in Figur 7 linksseitig gezeigte nabenseitige Getriebeteil 34 steht in Eingriff mit dem radträgerseitigen Getriebeteil 44 und wirkt mit diesem zusammen. Um in Eingriff mit dem radträgerseitigen Getriebeteil 44 gebracht zu werden, bewegen sich die nabenseitigen Getriebeteile 34 also in einer radialen Richtung 66 zum radträgerseitigem Getriebeteil 44 hin.

Die nabenseitigen Getriebeteile 34 sind an ihrem dem radträgerseitigen Getriebeteil zugewandten Ende 70 mit einem Querschnitt ausgeführt, dessen Erstreckung sich in radialer Richtung 66 gesehen aufweitet.

Die Kurvenbahn 52, welche durch die Kurvennut gebildet ist, weist zwei Kurvenflanken 72 auf, wobei beide Kurvenflanken 72 in radialer Richtung gesehen zur Rotationsachse hin verlaufen. Damit ist gemeint, dass sie in der Schnittansicht von Figur 7, also bei einem Schnitt entlang der radialen Richtung 66, nicht exakt in radialer Richtung 66 verlaufen. Mit anderen Worten die lichte Weite der Kurvenbahn 52 steigt nach radial Außen an.

Durch die eben beschriebene und grob gesagt abgeschrägte Ausführung der Kurvenbahn 52 sowie der Eingriffsabschnitte 48 der nabenseitigen Getriebeteile 34 wird ein sanftes Ein- und Auskuppeln der nabenseitigen Getriebeteile 34 in das radträgerseitige Getriebeteil 44 ermöglicht.

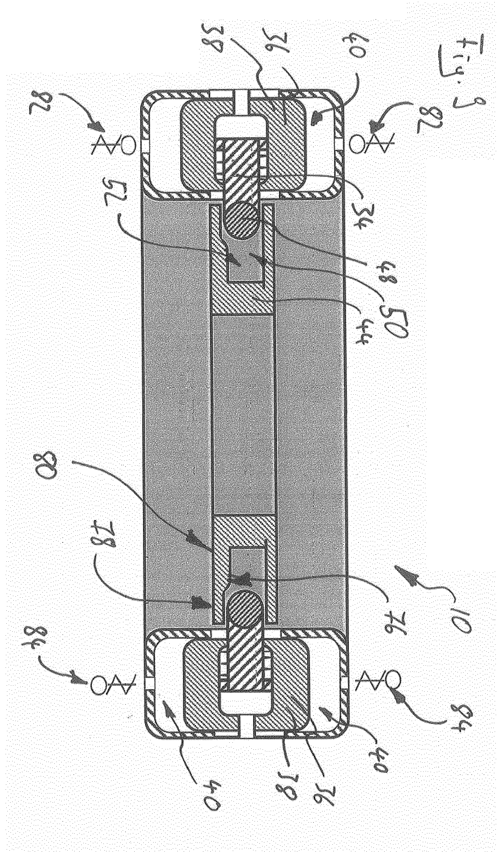

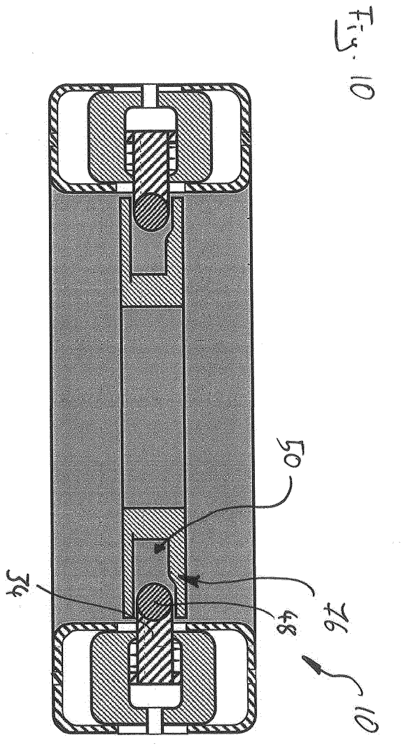

Figur 9 und 10 zeigen eine alternative Ausführungsform der Verdichteranordnung 10. Bei dieser Ausführungsform sind die Nabenseitigen Getriebeteile 34 stiftförmig mit einem rotierbaren kugelförmigen Eingriffselement 48 ausgebildet.

Das radträgerseitige Getriebeteil 44 umfasste eine als Kurvenbahn 50 ausgebildete Zylinderkurve 52. Die Kurvenbahn weist einen Stufenabschnitt 76 auf. Der Stufenabschnitt 76 stellt keine scharfe Stufe sondern einen sanften Übergang von einem ersten aufgeweiteten Bereich 78 in einen führenden engeren Bereich 80 der Kurvenbahn dar.

Wie besonders gut in Figur 9 gezeigt weist der ringförmige Kompressionsraum 40 Rückschlagventile auf. Eine erste Art Rückschlagventile 82 ist derart bezüglich des Kompressionsraums 40 angeordnet, dass bei einer Förderbewegung des Ringkolbens Luft ausströmen kann, während eine zweite Art Rückschlagventile 84 derart angeordnet ist, dass Luft in den die Kompressionsräume 40 bei einer Saugbewegung des Ringkolbens angesaugt werden kann.

Figur 10 zeigt die Verdichteranordnung 10 aus Figur 9 in einem in Umfangsrichtung um 90 Grad gedrehten Schnitt. Aufgrund der Drehung um 90 Grad beim Schnitt ist der Stufenabschnitt 76 nicht mehr an der Unterseite der Kurvenbahn 50 angeordnet, sondern an der Oberseite. In einem Schnitt zwischen diesen beiden in Figur 9 und 10 gezeigten Winkeln ist der Stufenabschnitt 76 in verminderter Ausprägung dann sowohl an Ober- und Unterseite der Kurvenbahn 50 ausgebildet, um ein sanftes Einkuppeln der nabenseitigen Getriebeteile stets zu gewährleisten.

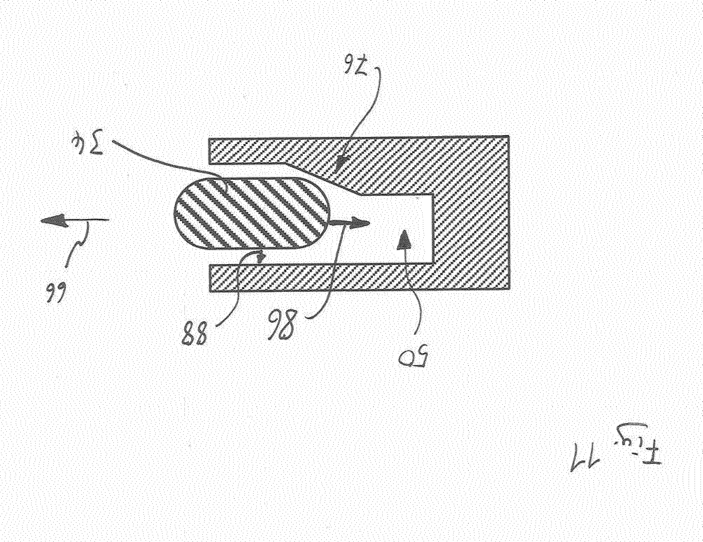

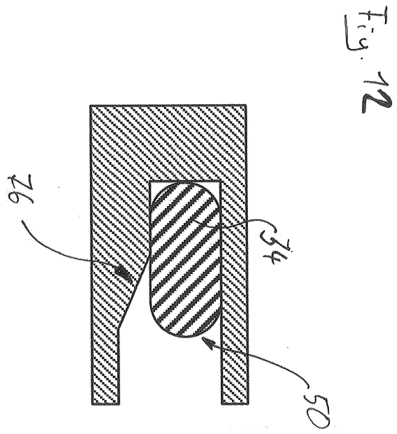

Der Einkuppelvorgang der nabenseitigen Getriebeteile 34 in die Kurvenbahn 50 ist in den Figuren 11 und 12 schematisch dargestellt.

Die Einkuppelbewegung des nabenseitigen Getriebeteils 34 ist durch einen Pfeil 86 symbolisch angedeutet. Durch die radial einwärts gerichtete Bewegung des nabenseitigen Getriebeteils 34 wird das nabenseitige Getriebeteil 34 zusätzlich zur radial einwärts gerichteten Bewegung 86 auch in Richtung der Rotationsachse bewegt, was durch einen Pfeil mit dem Bezugszeichen 88 angedeutet ist.

Dies führt zu einer Bewegung des Ringkolbens 38. Die anschließend durch rotatorische Relativbewegung des radträgerseitigen Getriebeteils 44 gegenüber dem nabenseitigen Getriebeteil 34 zustande kommende Bewegung des nabenseitigen Getriebeteils 34 überträgt sich auf den Ringkolben 36 was zur Förderung von Druckmittel aus dem Kompressionsraum 40 führt.

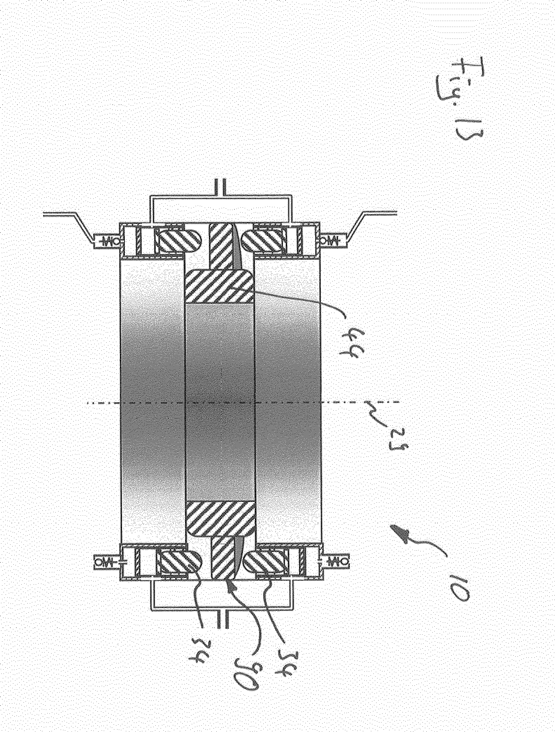

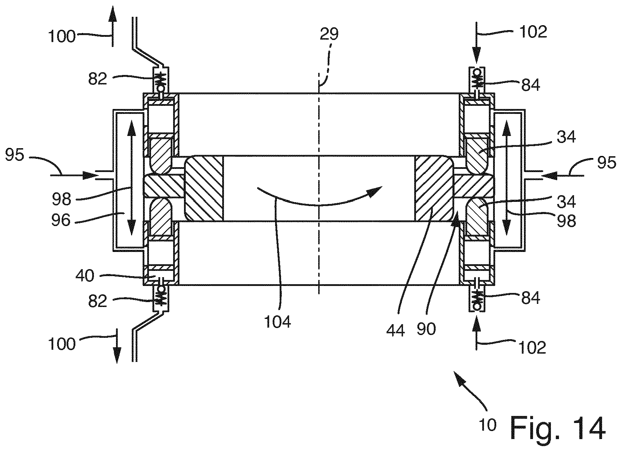

Figur 13 zeigt eine weitere Alternative Ausführungsform der erfindungsgemäßen Verdichteranordnung 10. Bei der in Figur 13 und 14 gezeigten Ausführungsform ist die Zylinderkurve 52 anstatt als Kurvenbahn 50 als Wulstzylinderkurve 90 ausgeführt.

Die Wulstzylinderkurve 90 wird dabei, in Richtung der Rotationsachse 29 gesehen, jeweils von oben und unten durch ein nabenseitiges Getriebeteil 34 ergriffen, wenn die Verdichteranordnung Druckmittel fördert. Dieser Förderzustand ist in Figur 14 gezeigt während in Figur 13 eine Freilaufstellung der Verdichteranordnung 10 dargestellt ist, in der die nabenseitigen Getriebeteile 34 beabstandet zur Wulstzylinderkurve 90 angeordnet sind.

Die nabenseitigen Getriebeteile 34 sind über Federn in die in Figur 13 gezeigten Stellung vorgespannt. Um die Verdichteranordnung 10 in einen Förderzustand zu überführen, wird Druckmittel in Richtung der Pfeile 95 in eine Druckkammer 96 eingeleitet. Hierdurch bewegen sich die nabenseitigen Getriebeteile 34 auf die Wulstzylinderkurve 90 zu und ergreifen diese wie in Figur 14 dargestellt. Dieser Zustand wird solange beibehalten, wie die nabenseitigen Getriebeteile 34 mit Druckmittel über den Druckraum 96 beaufschlagt sind.

Sind die nabenseitigen Getriebeteile 34 in Kontakt mit der Wulstzylinderkurve 90, so bewegen sich die Ringkolben auf und ab, was durch den Pfeil 98 illustriert ist. Druckmittel wird über den Ringförmigen Kompressionsraum gefördert. Dabei öffnen die in Auslassrichtung öffnenden Rückschlagventile 82 und Druckmittel strömt in Richtung der Pfeile 100. Ist der Kolben in einer Saugphase, so wird Umgebungsluft über die in Einlassrichtung öffnenden Rückschlagventile 84 angesaugt, was durch die Pfeile 102 illustriert ist.

Die Rotation des radträgerseitigen Getriebeteils 44 gegenüber den nabenfesten oder nabenseitigen Komponenten in Figur 14 durch den Pfeil 104 dargestellt.

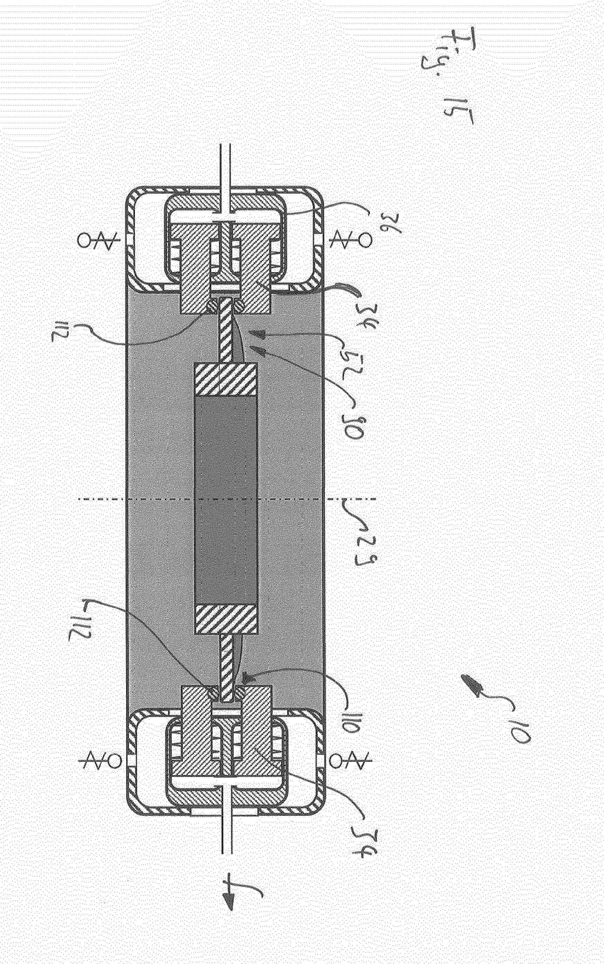

Figur 15 Zeigt eine weitere Ausführungsform der erfindungsgemäßen Verdichteranordnung 10.

Bei dieser Ausführungsform ist die Zylinderkurve 52, wie in der Ausführungsform der Figuren 13 und 14, als Wulstzylinderkurve 90 ausgeführt. Die Wulstzylinderkurve 90 der Ausführungsform der Figuren 15 bis 17 unterscheidet sich jedoch von der Wulstzylinderkurve 90 der Figuren 13 und 14 dadurch, dass sie an ihrem radial außenliegend einen Kreisscheibenabschnitt 110 aufweist.

Die Oberflächen des Kreisscheibenabschnitts 110 verlaufen in Rotationsrichtung 29 gesehen jeweils in einer Ebene während die Oberflächen der Wulstzylinderkurve jeweils entlang der Umfangsrichtung aus diesen Ebenen in Rotationsrichtung 29 vorwärts und rückwärts hinauslaufen.

Die nabenseitigen Getriebeteile 34 sind jeweils zangenartig ausgebildet mit Rollenkörpern 112, die die Wulstzylinderkurve 90 jeweils an Oberseite und Unterseite in Rotationsrichtung 29 gesehen ergreifen.

Kontaktieren Die Rollkörper 112 die Wulstzylinderkurve 90 an ihrem Kreisscheibenabschnitt 110, so erfolgt keine Bewegung des Verdichterbauteils 36, da keine Verschiebung des nabenseitigen Getriebeteils 34 in Richtung der Rotationsachse 29 stattfindet.

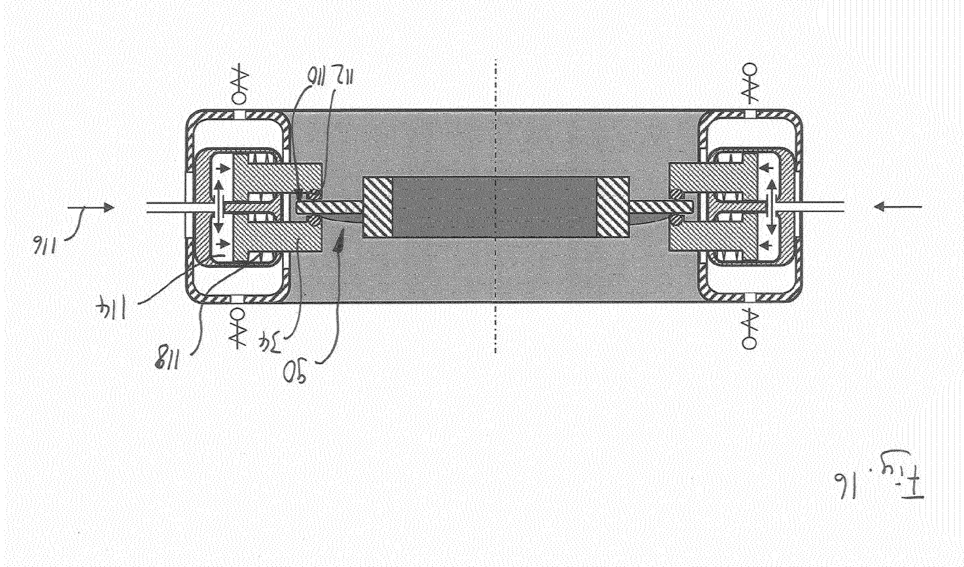

Wird nun Druckmittel in einen Druckraum 114 eingeleitet, was in Figur 16 durch einen Pfeil 116 dargestellt ist, so bewegen sich die nabenseitigen Getriebeteile 34 mit ihren Rollenkörpern 112 nach radial einwärts, wodurch sie von dem Kreisscheibenabschnitt 110 auf die Wulstzylinderkurve 90 geschoben werden.

Dabei ist eine Feder 118, die die nabenseitigen Getriebeteile 34 nach radial außen vorspannt derart stark ausgeführt, dass der Druck des Druckmittels in den Druckraum 114 die nabenseitigen Getriebeteile 34 nicht komplett nach radial innen schieben kann. Der Druck des Druckmittels im Druckraum 114 wird durch Verbindung mit der Reifenkavität des zu füllenden Reifens bereitgestellt. Hierzu ist der Druckraum 114 mit der Reifenkavität über ein Kupplungsventil verbunden, dass öffnet wenn ein bestimmter Schwellenwertdruck unterschritten wird. Wird ein Solldruck, der über dem Schwellenwert liegt, erreicht, so schließt dieses Kupplungsventil und die Leitung zum Druckraum 114 hin wird entlüftet.

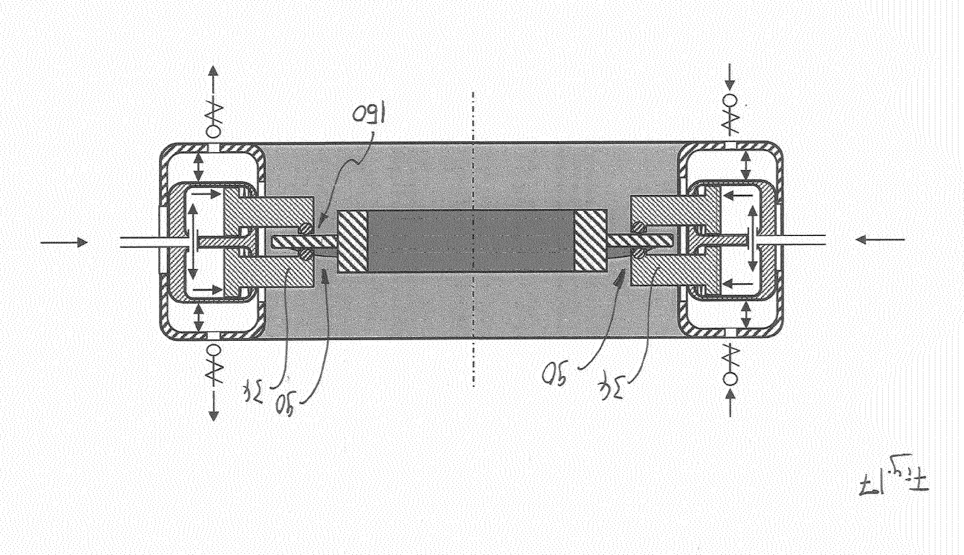

In Figur 17 ist ein Zustand gezeigt, in dem die nabenseitigen Getriebeteile 34 in ihrer Maximalauslenkung auf die Wulstzylinderkurve 90 aufgeschoben sind. Da die nabenseitigen Getriebeteile 34 keinen Anschlag haben und über die Feder 118 nach radial außen gespannt sind und über Druckmittelbeaufschlagung nach radial innen gedrückt sind, ist ihre Position nicht exakt vorgegeben wodurch die verschleißbedingte Ausbildung einer Riefe einer Wulstzylinderkurve 90 vermieden wird. Die nabenseitigen Getriebeteile 34 haben einen variablen Kontaktabschnitt 150 mit der Wulstzylinderkurve 90.

Bevorzugt ist bei dieser Ausführungsform außerdem, wenn die zangenartigen Arme des nabenseitigen Getriebeteils 34, wenn kein Druck an dem nabenseitigen Getriebeteil anliegt, auseinander bewegt werden, so dass die Rollenkörper 112 nicht auf der Wulstzylinderkurve 90 anliegen.

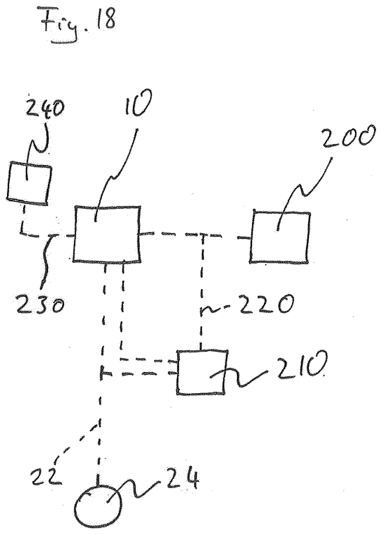

Wie in Figur 18 gezeigt, kann die Verdichteranordnung 10 allgemein mit einem Filter 200 und einer Kontrolleinrichtung 210 verbunden sein. Der Filter 200 ist dabei vorzugweise derart angeordnet, dass er fluidisch vor den Druckmitteleinlässen bzw. Lufteinlässen der Verdichteranordnung 10 angeordnet ist.

Über eine Messverbindung 220 kann die Kontrolleinrichtung 210 erfassen, wenn der Filter 200 verstopft ist. Wird eine Verstopfung des Filters 200 durch die Kontrolleinrichtung wandert 10 erfasst, so kann der Filter dadurch gereinigt werden, dass er in umgekehrter Strömungsrichtung mit Druckmittel bzw. Luft beaufschlagt wird. In der üblichen Betriebsweise der Verdichteranordnung 10 wird Luft über den Filter 200 in Richtung der Verdichteranordnung 10 und von dort zur Reifenkavität 24 gefördert. In einem Reinigungsvorgang wird Druckmittel bzw. Luft entweder aus der Reifenkavität 24 abgelassen und in umgekehrter Strömungsrichtung durch den Filter 200 gefördert oder die Verdichteranordnung 10 nimmt ihren Betrieb auf und fördert Druckmittel statt zur Reifenkavität 24 in umgekehrter Strömungsrichtung zum Filter 200. Hierzu saugt die Verdichteranordnung 10 Druckmittel über einen zusätzlichen Einlass 230 ein, der einen weiteren Luftfilter 240 aufweist, der in ähnlicher Weise gereinigt werden kann.

Vorteilhafterweise kann die Kontrolleinrichtung 210 zur Messung und/oder Anzeige des Drucks, der Temperatur und/oder der Feuchtigkeit des Druckmittels in der Reifenkavität 24 dienen, wobei diese Funktionen unabhängig von den weiteren Funktionen der Kontrolleinrichtung 210 sind.

In Figur 23 ist eine beispielhafte Variante der Ansteuerung der Kupplungseinrichtung 54 dargestellt. Die Betätigung der Kupplungseinrichtung 54 kann jedoch auch elektrisch elektromagnetisch oder elektromechanisch erfolgen. Hierzu kann elektrische Energie von der Hauptbatterie des Fahrzeugs oder von einem dort vorgesehenen Generator oder einer anderen Energiequelle, über Schleifkontakte zur Nabenseite geführt werden.

Denkbar ist jedoch auch die Anordnung eines Generators auf der Nabenseite, der elektrische Energie aus der rotatorische Relativbewegung zwischen Nabenseite und Radträgerseite gewinnt. Ebenso denkbar ist die Anordnung von Akkumulatoren auf der Nabenseite insbesondere in den Speichen der Felge 1.

Die Verdichteranordnung 10, insbesondere deren Kupplungseinrichtung 54, ist über eine Kupplungsdruckmittelleitung 300 mit der Reifenkavität 24 verbunden. In der Kupplungsdruckmittelleitung 300 ist ein Kupplungsventil 310 angeordnet. An der Kupplungsdruckmittelleitung 300 ist überdies ein Entlastungsventil 320 vorgesehen. Die Kompressionsräume 40, 42 der Verdichteranordnung 10 sind über eine zur Förderung vorgesehenen Druckmittelleitung 330 mit der Reifenkavität 24 verbunden.

Am Kupplungsventil 310 liegt das Druckmittel der Reifenkavität 24 unter dem im Reifen herrschenden Druck an. Bei Unterschreiten eines Reifendruckschwellenwerts öffnet das Kupplungsventil 310, wodurch die Kupplungseinrichtung 54 mittels Druckmittel aus der Reifenkavität 24 betätigt wird und das nabenseitige Getriebeteil 34 in Zusammenwirkung mit dem radträgerseitigen Getriebeteil 44 gebracht wird.

Fährt das Fahrzeug, findet also eine rotatorische Relativbewegung zwischen Nabenseite und Radträgerseite statt, so wird Druckmittel aus den Kompressionsräumen 40, 42 zur Reifenkavität 24 über die zur Förderung vorgesehene Druckmittelleitung 330 gefördert.

Die Kupplungsdruckmittelleitung 300 und die zur Förderung vorgesehenen Druckmittelleitung 330 können auch gemeinsam als eine einzige Leitung ausgeführt sein.

Bei Überschreiten eines Reifendrucksollwerts, der vorzugsweise über dem Reifendruckschwellenwert liegt, schließt das Kupplungsventil 310, wodurch die Beaufschlagung der Kupplungseinrichtung 54 mit Druckmittel unterbrochen wird. Vorzugsweise wird die Kupplungseinrichtung 54 über das Kupplungsventil 310 oder das Entlastungsventil 320 bei Überschreiten des Reifendrucksollwerts entlüftet. Damit wird sichergestellt, dass die Verdichteranordnung 10 ihren Betrieb direkt einstellt sobald ein Druckmittelsollwert in der Reifenkavität 24 erreicht ist.

Diese Betriebsart der Kupplungseinrichtung 54 ist mit sämtlichen Ausführungsformen und einzelnen Aspekten dieser Ausführungsformen der Verdichteranordnung 10 dieser Anmeldung kombinierbar.

## Patentansprüche

1. Verdichteranordnung (10) zur Druckmittelversorgung einer Reifenkavität (24) eines Reifens eines auf einer Radnabe (18) montierbaren Fahrzeugrads, wobei die Radnabe (18) um eine Rotationsachse (29) drehbar an einem Radträger (16) lagerbar ist,
wobei die Verdichteranordnung (10) wenigstens einen nabenseitigen Kompressionsraum (40, 42) umfasst, dessen Volumen durch eine translatorische Bewegung eines Verdichterbauteils (36) veränderbar ist, wobei durch eine Volumenverminderung des Kompressionsraums (40, 42) ein in die Reifenkavität zu leitendes Druckmittel unter Druck setzbar ist, und wobei die Verdichteranordnung (10) ein Getriebe (33), vorzugsweise ein Kurvengetriebe, umfasst, das eingerichtet ist, um durch ein Zusammenwirken eines radträgerseitigen Getriebeteils (44) mit einem nabenseitigen Getriebeteil (34) eine Rotationsbewegung zwischen Radträgerseite und Radnabenseite in eine oszillierende translatorische Bewegung des Verdichterbauteils (36) umzuwandeln, wobei das radträgerseitige Getriebeteil (44) eine Zylinderkurve (52) umfasst,
**dadurch gekennzeichnet, dass**
das nabenseitige Getriebeteil (34) durch eine, vorzugsweise ausschließlich, translatorische Bewegung in radialer Richtung (66) in eine Stellung überführbar ist, in der es mit dem radträgerseitigen Getriebeteil (44) zusammenwirkt.

2. Verdichteranordnung (10) nach Anspruch 1,
wobei das radträgerseitige Getriebeteil (44) eine nutartige Kurvenbahn (50) umfasst.

3. Verdichteranordnung (10) nach Anspruch 1 oder 2,
wobei das nabenseitige Getriebeteil (34) einen Stößelabtrieb umfasst.

4. Verdichteranordnung (10) nach einem der vorangegangenen Ansprüche, wobei die translatorische Bewegung des Verdichterbauteils (36) wenigstens teilweise in Richtung der Rotationsachse (29), vorzugsweise vollständig in Richtung der Rotationsachse (29), erfolgt.

5. Verdichteranordnung (10) nach einem der vorangegangenen Ansprüche, wobei das nabenseitige Getriebeteil (34) ein stiftartiges Eingriffselement (48) zum Eingriff in die Zylinderkurve (52), vorzugsweise in die nutartige Kurvenbahn (50) umfasst; oder
wobei das nabenseitige Getriebeteil (34) ein Eingriffselement (48) zum Eingriff in die Zylinderkurve (52) umfasst, wobei das Eingriffselement (48) an seinen dem radträgerseitigen Getriebeteil (44) zugewandten Ende (70) einen Querschnitt aufweist dessen Erstreckung sich in radialer Richtung (66) gesehen aufweitet.

6. Verdichteranordnung (10) nach einem der vorangegangenen Ansprüche, wobei die Zylinderkurve (25) wenigstens eine Kurvenflanke (72) aufweist, die wenigstens in einem Teilbereich ihres in radialer Richtung (66) gesehenen Verlaufs zu der Rotationsachse hin verläuft; und/oder wobei das radträgerseitige Getriebeteil (44) eine nutartige Kurvenbahn (50) umfasst, wobei die Kurvenbahn (50) zwei sich gegenüberliegende Kurvenflanken (72) aufweist, die jeweils wenigstens in einem Teilbereich ihres in radialer Richtung (66) gesehenen Verlaufs zu der Rotationsachse hin verlaufen.

7. Verdichteranordnung (10) nach einem der vorangegangenen Ansprüche, wobei das Verdichterbauteil (38) einen Ringkolben (36) umfasst.

8. Verdichteranordnung (10) nach einem der vorangegangenen Ansprüche, wobei entlang der Rotationsachse (29) gesehen jeweils vor und hinter einem Kontaktabschnitt des nabenseitigen Getriebeteils (34) mit der Zylinderkurve (52) ein Kompressionsraum (40, 42) angeordnet ist.

9. Verdichteranordnung (10) nach einem der vorangegangenen Ansprüche, wobei das radträgerseitige Getriebeteil (44) radial einwärts von dem nabenseitigen Getriebeteil (34) angeordnet ist; oder
wobei das radträgerseitige Getriebeteil (44) radial auswärts von dem nabenseitigen Getriebeteil (34) angeordnet ist.

10. Verdichteranordnung (10) nach einem der vorangegangenen Ansprüche, wobei sie zwei sich bezüglich der Rotationsachse (29) diametral gegenüberliegende nabenseitige Getriebeteile (34) umfasst.

11. Verdichteranordnung (10) nach einem der vorangegangenen Ansprüche, wobei sie ein Kupplungseinrichtung (54) umfasst, mittels welcher das nabenseitige Getriebeteil (34) in Zusammenwirkung mit dem radträgerseitigen Getriebeteil (44) bringbar ist.

12. Verdichteranordnung (10) nach einem der vorangegangenen Ansprüche, wobei die Kupplungseinrichtung (54) derart ausgebildet ist, dass das nabenseitige Getriebeteil (34) in eine Stellung vorgespannt ist, in der es nicht mit dem radträgerseitigen Getriebeteil (44) zusammenwirkt; und/oder dass die Kupplungseinrichtung (54) pneumatisch, magnetisch oder elektromechanisch betätigbar ist; und/oder
dass die Kupplungseinrichtung (54) mittels Druckmittel aus der Reifenkavität (24) betätigbar ist.

13. Verdichteranordnung (10) nach einem der vorangegangenen Ansprüche, wobei ein Kupplungsventil (70, 310) fluidisch zwischen Kupplungseinrichtung (54) und Reifenkavität (24) vorgesehen ist, an dem das Druckmittel aus der Reifenkavität (24) anliegt und welches bei Unterschreiten eines Reifendruckschwellenwerts öffnet, wodurch die Kupplungseinrichtung (54) mittels Druckmittel aus der Reifenkavität (24) betätigt wird und das nabenseitige Getriebeteil (34) in Zusammenwirkung mit dem radträgerseitigen Getriebeteil (44) gebracht wird,
wobei vorzugsweise das Kupplungsventil (70), bei Überschreiten eines Reifendrucksollwerts, vorzugsweise der über dem Reifendruckschwellenwert liegt, schließt, wodurch die Beaufschlagung der Kupplungseinrichtung (54) mit Druckmittel unterbrochen wird, vorzugsweise wobei das Kupplungsventil (70, 310) oder ein Entlastungsventil (74, 320) bei Überschreiten des Reifendrucksollwerts die Kupplungseinrichtung (54) entlüftet.

14. Verdichteranordnung (10) nach einem der vorangegangenen Ansprüche, wobei sie eine Einrichtung (210) zur Messung und/oder Anzeige des Drucks, der Temperatur und/oder der Feuchtigkeit des Druckmittels in der Reifenkavität (24) umfasst, vorzugsweise die über die Druckmittelleitung (22) mit der Reifenkavität (24) verbindbar ist.

15. Verdichteranordnung (10) nach einem der vorangegangenen Ansprüche, wobei sie druckmitteleinlassseitig mit einem Filter (200) verbunden ist, wobei die Verdichteranordnung (10) vorzugsweise ausgebildet ist, um Druckmittel aus der Reifenkavität (24) oder über Förderung durch die Verdichteranordnung (10) zum Reinigen des Filters (200) zu verwenden.

## Claims

1. A compressor assembly (10) for supplying pressure medium to a tire cavity (24) of a tire of a vehicle wheel which can be mounted on a wheel hub (18), wherein the wheel hub (18) can be mounted on a wheel carrier (16) such that it can rotate about an axis of rotation (29),
wherein the compressor assembly (10) comprises at least one hub-side compression chamber (40, 42), the volume of which can be changed by a translatory movement of a compressor component (36), wherein a pressure medium to be conducted into the tire cavity can be pressurized by reducing the volume of the compression chamber (40, 42), and wherein the compressor assembly (10) comprises a transmission (33), preferably a cam mechanism, which is configured to convert a rotational movement between the wheel carrier side and the wheel hub side into an oscillating translatory movement of the compressor component (36) through an interaction of a wheel carrier-side transmission component (44) with a hub-side transmission component (34), wherein the wheel carrier-side transmission component (44) comprises a cylindrical cam (52),
**characterized in that**
the hub-side transmission component (34) can be moved into a position in which it interacts with the wheel carrier-side transmission component (44) by means of a, preferably exclusively, translatory movement in radial direction (66).

2. The compressor assembly (10) according to Claim 1,
wherein the wheel carrier-side transmission component (44) comprises a groove-like cam track (50).

3. The compressor assembly (10) according to Claim 1 or 2, wherein the hub-side transmission component (34) comprises a tappet output drive.

4. The compressor assembly (10) according to any one of the preceding claims,
wherein the translatory movement of the compressor component (36) takes place at least partly in the direction of the axis of rotation (29), preferably entirely in the direction of the axis of rotation (29).

5. The compressor assembly (10) according to any one of the preceding claims,
wherein the hub-side transmission component (34) comprises a pin-like engagement element (48) for engaging in the cylindrical cam (52), preferably in the groove-like cam track (50); or
wherein the hub-side transmission component (34) comprises an engagement element (48) for engaging in the cylindrical cam (52), wherein, at its end (70) facing the wheel carrier-side transmission component (44), the engagement element (48) has a cross-section, the extension of which widens when viewed in radial direction (66).

6. The compressor assembly (10) according to any one of the preceding claims,
wherein the cylindrical cam (25) comprises at least one curve flank (72) which, at least in a section of its course viewed in radial direction (66), extends toward the axis of rotation; and/or
wherein the wheel carrier-side transmission component (44) comprises a groove-like cam track (50), wherein the cam track (50) comprises two opposite curve flanks (72), each of which, at least in a section of its course viewed in radial direction (66), extends toward the axis of rotation.

7. The compressor assembly (10) according to any one of the preceding claims,
wherein the compressor component (38) comprises an annular piston (36).

8. The compressor assembly (10) according to any one of the preceding claims,
wherein, viewed along the axis of rotation (29), a compression chamber (40, 42) is respectively disposed in front of and behind a contact section of the hub-side transmission component (34) comprising the cylindrical cam (52).

9. The compressor assembly (10) according to any one of the preceding claims,
wherein the wheel carrier-side transmission component (44) is disposed radially inward of the hub-side transmission component (34); or
wherein the wheel carrier-side transmission component (44) is disposed radially outward of the hub-side transmission component (34).

10. The compressor assembly (10) according to any one of the preceding claims,
wherein said assembly comprises two hub-side transmission components (34) which are diametrically opposite to one another relative to the axis of rotation (29) .

11. The compressor assembly (10) according to any one of the preceding claims,
wherein said assembly comprises a coupling means (54) by means of which the hub-side transmission component (34) can be brought into interaction with the wheel carrier-side transmission component (44).

12. The compressor assembly (10) according to any one of the preceding claims,
wherein the coupling means (54) is configured such that the hub-side transmission component (34) is pretensioned in a position in which it does not interact with the wheel carrier-side transmission component (44); and/or
the coupling means (54) can be actuated pneumatically, magnetically, or electromechanically; and/or
the coupling means (54) can be actuated by means of pressure medium from the tire cavity (24).

13. The compressor assembly (10) according to any one of the preceding claims,
wherein a coupling valve (70, 310) is fluidically provided between the coupling means (54) and the tire cavity (24), against which the pressure medium from the tire cavity (24) pushes and which opens when the tire pressure falls below a tire pressure threshold value, as a result of which the coupling means (54) is actuated by means of the pressure medium from the tire cavity (24) and the hub-side transmission component (34) is brought into interaction with the wheel carrier-side transmission component (44),
wherein the coupling valve (70) preferably closes when the tire pressure exceeds a tire pressure target value, which is preferably higher than a tire pressure threshold value, as a result of which the pressurization of the coupling means (54) with pressure medium is interrupted, preferably wherein the coupling valve (70, 310) or a relief valve (74, 320) vents the coupling means (54) when the tire pressure exceeds the tire pressure target value.

14. The compressor assembly (10) according to any one of the preceding claims,
wherein said assembly comprises a means (210) for measuring and/or indicating the pressure, the temperature, and/or the moisture of the pressure medium in the tire cavity (24) which can preferably be connected to the tire cavity (24) via the pressure medium line (22).

15. The compressor assembly (10) according to any one of the preceding claims,
wherein said assembly is connected to a filter (200) on the pressure medium inlet side,
wherein the compressor assembly (10) is preferably configured to use pressure medium from the tire cavity (24) or via conveyance through the compressor assembly (10) to clean the filter (200).

## Revendications

1. Ensemble compresseur (10) pour la fourniture d'un fluide sous pression à une cavité de pneu (24) d'un pneu d'une roue de véhicule qui peut être montée sur un moyeu de roue (18), dans lequel le moyeu de roue (18) peut être monté sur un support de roue (16) de sorte à pouvoir tourner autour d'un axe de rotation (29),
dans lequel l'ensemble compresseur (10) comprend au moins une chambre de compression côté moyeu (40, 42), dont le volume peut être modifié par un mouvement de translation d'un élément de compresseur (36), dans lequel un fluide sous pression devant être conduit dans la cavité de pneu peut être pressurisé par la réduction du volume de la chambre de compression (40, 42), et dans lequel l'ensemble de compresseur (10) comprend une transmission (33), de préférence un mécanisme à came, qui est configuré pour convertir un mouvement de rotation entre le côté de support de roue et le côté de moyeu de roue en un mouvement de translation oscillant de l'élément de compresseur (36) via une interaction d'un élément de transmission côté support de roue (44) avec un élément de transmission côté moyeu (34), dans lequel l'élément de transmission côté support de roue (44) comprend une came cylindrique (52),
**caractérisé en ce que**
l'élément de transmission côté moyeu (34) peut être déplacé dans une position dans laquelle il interagit avec l'élément de transmission côté support de roue (44) au moyen d'un mouvement de translation, de préférence exclusivement, dans une direction radiale (66) .

2. Ensemble compresseur (10) selon la revendication 1, dans lequel l'élément de transmission côté support de roue (44) comprend un chemin de came en forme de rainure (50) .

3. Ensemble compresseur (10) selon la revendication 1 ou 2,
dans lequel l'élément de transmission côté moyeu (34) comprend un entraînement de sortie de poussoir.

4. Ensemble compresseur (10) selon l'une quelconque des revendications précédentes,
dans lequel le mouvement de translation de l'élément de compresseur (36) a lieu au moins partiellement dans la direction de l'axe de rotation (29), de préférence entièrement dans la direction de l'axe de rotation (29).

5. Ensemble compresseur (10) selon l'une quelconque des revendications précédentes,
dans lequel l'élément de transmission côté moyeu (34) comprend un élément d'engagement de type broche (48) pour l'engagement dans la came cylindrique (52), de préférence dans le chemin de came de type rainure (50) ; ou
dans lequel l'élément de transmission côté moyeu (34) comprend un élément d'engagement (48) pour l'engagement dans la came cylindrique (52), dans lequel, à son extrémité (70) faisant face à l'élément de transmission côté support de roue (44), l'élément d'engagement (48) a une section transversale dont l'extension s'élargit lorsqu'elle est vue dans une direction radiale (66).

6. Ensemble compresseur (10) selon l'une quelconque des revendications précédentes,
dans lequel la came cylindrique (25) comprend au moins un flanc courbe (72) qui, au moins dans une section de sa course vue dans une direction radiale (66), s'étend vers l'axe de rotation ; et/ou
dans lequel l'élément de transmission côté support de roue (44) comprend un chemin de came en forme de rainure (50), dans lequel le chemin de came (50) comprend deux flancs courbes opposés (72), dont chacun, au moins dans une section de sa course vue dans une direction radiale (66), s'étend vers l'axe de rotation.

7. Ensemble compresseur (10) selon l'une quelconque des revendications précédentes,
dans lequel l'élément de compresseur (38) comprend un piston annulaire (36).

8. Ensemble compresseur (10) selon l'une quelconque des revendications précédentes,
dans lequel, vue le long de l'axe de rotation (29), une chambre de compression (40, 42) est respectivement disposée devant et derrière une section de contact de l'élément de transmission côté moyeu (34) comprenant la came cylindrique (52).

9. Ensemble compresseur (10) selon l'une quelconque des revendications précédentes,
dans lequel l'élément de transmission côté support de roue (44) est disposé radialement vers l'intérieur de l'élément de transmission côté moyeu (34) ; ou
dans lequel l'élément de transmission côté support de roue (44) est disposé radialement vers l'extérieur de l'élément de transmission côté moyeu (34).

10. Ensemble compresseur (10) selon l'une quelconque des revendications précédentes,
dans lequel ledit ensemble comprend deux éléments de transmission côté moyeu (34) qui sont diamétralement opposés l'un à l'autre par rapport à l'axe de rotation (29) .

11. Ensemble compresseur (10) selon l'une quelconque des revendications précédentes,
dans lequel ledit ensemble comprend un moyen de couplage (54) au moyen duquel l'élément de transmission côté moyeu (34) peut être amené en interaction avec l'élément de transmission côté support de roue (44).

12. Ensemble compresseur (10) selon l'une quelconque des revendications précédentes,
dans lequel le moyen de couplage (54) est configuré de sorte que l'élément de transmission côté moyeu (34) est précontraint dans une position dans laquelle il n'interagit pas avec l'élément de transmission côté support de roue (44) ; et/ou
le moyen de couplage (54) peut être actionné pneumatiquement, magnétiquement ou électromécaniquement ; et/ou
le moyen de couplage (54) peut être actionné au moyen d'un fluide sous pression provenant de la cavité de pneu (24).

13. Ensemble compresseur (10) selon l'une quelconque des revendications précédentes,
dans lequel une soupape de couplage (70, 310) est disposée de manière fluidique entre le moyen de couplage (54) et la cavité de pneu (24), contre laquelle le fluide sous pression provenant de la cavité de pneu (24) pousse et qui s'ouvre lorsque la pression du pneu tombe en dessous d'une valeur seuil de pression de pneu, en conséquence de quoi le moyen de couplage (54) est actionné au moyen du fluide sous pression provenant de la cavité de pneu (24) et l'élément de transmission côté moyeu (34) est amené en interaction avec l'élément de transmission côté support de roue (44),
dans lequel la soupape de couplage (70) se ferme de préférence lorsque la pression du pneu dépasse une valeur cible de pression du pneu, qui est de préférence supérieure à une valeur seuil de pression de pneu, en conséquence de quoi la mise sous pression du moyen de couplage (54) avec le fluide sous pression est interrompue, de préférence dans lequel la soupape de couplage (70, 310) ou une soupape de décharge (74, 320) ventile le moyen de couplage (54) lorsque la pression du pneu dépasse la valeur cible de pression de pneu.

14. Ensemble compresseur (10) selon l'une quelconque des revendications précédentes,
dans lequel ledit ensemble comprend un moyen (210) pour la mesure et/ou l'indication de la pression, la température, et/ou l'humidité du fluide sous pression dans la cavité de pneu (24) qui peut de préférence être relié à la cavité de pneu (24) via la conduite de fluide sous pression (22).

15. Ensemble compresseur (10) selon l'une quelconque des revendications précédentes,
dans lequel ledit ensemble est relié à un filtre (200) sur le côté d'entrée de fluide sous pression,
dans lequel l'ensemble de compresseur (10) est de préférence configuré pour utiliser un fluide sous pression provenant de la cavité de pneu (24) ou via un transport à travers l'ensemble compresseur (10) pour nettoyer le filtre (200).
